# EUROPÄISCHE PATENTSCHRIFT

(11) **EP 2 559 844 B1**
(45) Veröffentlichungstag und Bekanntmachung des Hinweises auf die Patenterteilung: **10.03.2021**
(21) Anmeldenummer: 12180226.8
(22) Anmeldetag: 13.08.2012
(51) Int. Cl.: E21B 43/20, E21B 43/24, E21B 43/32, C09K 8/592

(54) **VERFAHREN ZUR FÖRDERUNG VON VISKOSEM ERDÖL AUS UNTERIRDISCHEN LAGERSTÄTTEN**
METHOD FOR TRANSPORTING CRUDE OIL FROM SUBTERRANEAN STORAGE AREAS
PROCÉDÉ DE TRANSPORT DE PÉTROLE VISQUEUX À PARTIR DE STATIONS DE STOCKAGE SOUTERRAINES

(30) Priorität: 17.08.2011 EP 11177749
(43) Veröffentlichungstag der Anmeldung: 20.02.2013
(73) Patentinhaber: Wintershall Dea GmbH, 34119 Kassel (DE)
(72) Erfinder: STEHLE, Vladimir, 34123 Kassel (DE)
(74) Vertreter: Müller Schupfner & Partner Patent- und Rechtsanwaltspartnerschaft mbB

(56) Entgegenhaltungen:
- EP-A1- 2 333 026
- CN-A- 1 837 574
- US-A- 4 086 964
- US-A- 4 300 634
- US-A- 4 799 548
- US-A- 4 974 677

## Beschreibung

Die vorliegende Erfindung betrifft ein Verfahren zur Förderung von Erdöl aus Erdöllagerstätten, bei dem man zur Erhöhung der Erdölausbeute hoch permeable Bereiche der Erdölformation durch Injizieren mindestens einer Formulierung in die Lagerstätte blockiert, wobei die Formulierung erst in der Lagerstätte durch Injizieren von Wasserdampf auf eine Temperatur gebracht wird, bei der sich die Viskosität deutlich erhöht. Das Verfahren kann insbesondere im Finalstadium der Lagerstättenentwicklung zwischen Wasserfluten und Dampffluten der Lagerstätten eingesetzt werden.

In natürlichen Erdölvorkommen liegt Erdöl in Hohlräumen poröser Speichergesteine vor, welche zur Erdoberfläche hin von undurchlässigen Deckschichten abgeschlossen sind. Neben Erdöl, inklusive Anteilen von Erdgas, enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise um solche mit einem Durchmesser von nur ca. 1 µm; die Formation kann daneben aber auch Bereiche mit Poren größeren Durchmessers und/oder natürliche Brüche aufweisen. In einem Erdölvorkommen können eine oder mehrere ölführende Schichten vorhanden sein.

Nach dem Niederbringen der Bohrung in die ölführenden Schichten fließt das Öl zunächst aufgrund des natürlichen Lagerstättendrucks zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden. Bei höher viskosen Erdölen ist eine eruptive Produktion in der Regel überhaupt nicht möglich.

Um die Ausbeute zu steigern, werden daher die so genannten sekundären Förderverfahren eingesetzt.

Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Förderbohrungen gedrückt. Durch Wasserfluten kann der Ausbeutungsgrad unter bestimmten Bedingungen wesentlich gesteigert werden.

Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereiche mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei schweren bzw. viskosen Erdölen besonders ausgeprägt. Je höher die Erdölviskosität, desto wahrscheinlicher ist die schnelle Verwässerung der Produktion.

Zur Förderung von Erdöl aus Lagerstätten mit hoher Erdölviskosität kann das Erdöl auch durch Einpressen von Heißdampf in der Lagerstätte erwärmt und so die Ölviskosität verringert werden. Wie beim Wasserfluten können aber auch Heißdampf und Dampfkondensat unerwünscht schnell durch hoch permeable Zonen von den Injektionsbohrungen zu den Produktionsbohrungen durchschlagen, wodurch die Effizienz der tertiären Förderung reduziert wird.

Zurzeit ist es üblich, bei der Entwicklung von Lagerstätten mit viskosem Öl beide Schritte durchzuführen: Wasserfluten und im Anschluss daran Dampffluten. Das Blockieren der hoch permeablen Kanäle während des Dampfflutens ist wegen der sehr hohen Temperaturen in der Umgebung der Injektionsbohrung technologisch schwierig zu realisieren.

Im Stand der Technik sind Maßnahmen bekannt, derartige hoch permeable Zonen zwischen Injektionsbohrungen und Produktionsbohrungen mittels geeigneter Maßnahmen zu schließen. Hierdurch werden hoch permeable Zonen mit geringem Fließwiderstand blockiert und das Flutwasser bzw. der Flutdampf durchströmen wieder die ölgesättigten, niedrig permeablen Schichten. Derartige Maßnahmen sind auch als so genannte "Conformance Control" bekannt. Einen Überblick über Maßnahmen zur "Conformance Control" geben Borling et al. "Pushing out the oil with Conformance Control" in Oilfield Review (1994), Seiten 44 ff.

Zur "Conformance Control" können vergleichsweise niedrig viskose Formulierungen bestimmter chemischer Stoffe eingesetzt werden, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische, organische oder polymere Komponenten. Die Viskositätssteigerung der eingepressten Formulierung kann einerseits einfach zeitverzögert auftreten. Es sind aber auch Formulierungen bekannt, bei denen die Viskositätssteigerung im Wesentlichen durch den Temperaturanstieg ausgelöst wird, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt. Diese Formulierungen sind jedoch nur effizient anwendbar für Lagerstätten, deren Temperatur über 60 °C liegt.

SU 1 654 554 A1 offenbart Verfahren zum Ölgewinnen, bei dem Mischungen enthaltend Aluminiumchlorid oder Aluminiumnitrat, Harnstoff und Wasser in die Erdölinformationen injiziert werden. Bei den erhöhten Temperaturen in der Formation hydrolysiert der Harnstoff zu Kohlendioxid und Ammoniak. Der entstehende Ammoniak erhöht den pH-Wert des Wassers deutlich, wodurch hochviskoses Aluminiumhydroxidgel ausfällt, das die hoch permeablen Bereiche verstopft.

US 2008/0035344 A1 offenbart eine Mischung zum Blockieren unterirdischer Formationen mit verzögerter Gelierung, die mindestens ein säurelösliches, vernetzbares Polymer, beispielsweise teilweise hydrolysiertes Polyacrylamid, ein teilweise neutralisiertes Aluminiumsalz, beispielsweise ein Aluminiumhydroxidchlorid, sowie einen Aktivator umfasst, der unter Formationsbedingungen Basen freisetzen kann, beispielsweise Harnstoff, substituierte Harnstoffe oder Hexamethylentetramin. Die Mischung wird bevorzugt bei einer Temperatur von 0 bis 40 °C eingesetzt und geliert bei Temperaturen oberhalb von 50 °C je nach Einsatzbedingungen innerhalb von 2 h bis 10 Tagen.

RU 2 339 803 C2 beschreibt ein Verfahren zum Blockieren hoch permeabler Bereiche in Erdöllagerstätten, bei denen zunächst das Volumen des zu blockierenden, hoch permeablen Bereichs bestimmt wird. Anschließend wird eine wässrige Formulierung enthaltend Carboxymethylcellulose sowie Chromacetat als Vernetzer in den zu blockierenden Bereich injiziert, wobei das Volumen der injizierten Mischung 15 % bezogen auf das Gesamtvolumen des zu blockierenden Bereichs beträgt. Im nächsten Schritt wird eine wässrige Formulierung enthaltend Polyacrylamid und einen Vernetzer injiziert.

RU 2 361 074 beschreibt ein Verfahren zum Blockieren hoch permeabler Bereiche in Erdöllagerstätten mit hoher Lagerstättentemperatur, bei dem portionsweise Formulierungen auf Basis von Harnstoff und Aluminiumsalzen injiziert werden.

L. K. Altunina und V. A. Kushinov , Oil & Gas Science and Technology- Rev. IFP, Vol. 63 (2008), Seiten 37 bis 48 beschreiben verschiedene Thermogele und deren Verwendung zur Ölförderung, darunter Thermogele auf Basis von Harnstoff und Aluminiumsalz in sowie Thermogele auf Basis von Celluloseether.

US 4,141,416 offenbart ein Verfahren zur tertiären Erdölförderung, bei der eine wässrige alkalische Silikatlösung zur Absenkung der Wasser-Öl-Grenzflächenspannung in eine Erdölformation injiziert und hierdurch die Grenzflächenspannung verringert wird. In einer Variante können gleichzeitig permeable Bereiche der Erdölformation verschlossen werden, indem in einem zweiten Schritt zusätzlich Komponenten wie Säuren injiziert werden, die mit der alkalischen Silikatlösung Niederschläge bilden können.

US 4,300,634 beschreibt ein Verfahren zum Blockieren hochpermeabler Bereiche durch Schäume. Hierzu wird ein schäumbares Gel eingesetzt, welches Wasser, ein Tensid, einen Gelbildner, einen Aldehyd und eine Phenol-Verbindung enthält. Das Gel wird oberirdisch in einem Tank durch Mischen der Komponenten hergestellt und anschließend in die Erdöllagerstätte verpumpt. Der Gelbildner verhindert die Schaumbildung beim Verpumpen. Nachfolgend wird Wasserdampf in die Erdöllagerstätte verpresst, um den Gelbildner thermisch zu zersetzen. Durch die thermische Zersetzung des Gelbildners wird die Viskosität des Gels rapide reduziert, so dass sich ein Schaum ausbilden kann, bei dem Wasser die äußere Phase und Wasserdampf die Gasphase bildet.

Nachteilig an dem in der US 4,300,634 beschriebenen Gel ist, dass es aufgrund seiner hohen Viskosität nur in die Nahzonen der Injektionsbohrung gelangt. Weiterhin ist nachteilig, dass Schäume relativ instabil sind und in sich selbst zusammenfallen können, so dass mit dem in der US 4,300,634 beschriebenen Verfahren nur eine zeitlich begrenzte Blockierung hochpermeabler Zonen in der Erdöllagerstätte erreicht wird.

Zur Bildung stabiler Schäume muss nach der Schaumbildung normalerweise eine Ruhepause eingelegt werden. In dem Verfahren der US 4,300,634 erfolgt die Schaumbildung gleichzeitig mit der hydrodynamischen Wirkung der Flutwelle auf das eingepresste Gel. Die hydrodynamische Wirkung ist insbesondere in dem Bohrlochnahzonen besonders stark, so dass die Schäume insbesondere in den Bohrlochnahzonen massiv beschädigt werden.

RU 2 338 768 C1 beschreibt ein Verfahren zum Blockieren permeabler Bereiche in Erdöllagerstätten, bei dem eine Lösung enthaltend Natriumphosphat, Natriumoxalat, Natriumcarbonat und eine Mischung aus Carboxymethylcellulose und Xanthan sowie eine zweite Lösung enthaltend Kalziumchlorid, Kupferchlorid und Aluminiumchlorid jeweils separat in die Erdölformation injiziert werden, wobei sich die beiden Formulierungen unter Tage vermischen. Um ein vorzeitiges Vermischen zu verhindern, kann zwischen den beiden Formulierungen noch eine Portion Wasser in die Erdölformation injiziert werden. Die Formulierungen bilden nach dem Vermischen Niederschläge aus schwerlöslichen Hydroxiden und Kalziumsalzen.

Die Zeit, die die vorstehend beschriebenen, gelbildenden Formulierungen zu dessen Bildung benötigen, hängt außer von der Zusammensetzung und der Konzentration der Komponenten naturgemäß von der Temperatur ab, und zwar erfolgt die Gelbildung umso schneller, je höher die Temperatur ist. Während die Gelbildung bei Temperaturen von 50-120 °C Stunden, Tage oder gar Wochen benötigen kann, erfolgt die Gelbildung bei höheren Temperaturen naturgemäß deutlich schneller. So setzt gemäß L. K. Altunina und V. A. Kushinov, Oil & Gas Science and Technology- Rev. IFP, Vol. 63 (2008), Seiten 37 bis 48 die Gelbildung einer gelbildenden Formulierung enthaltend Aluminiumsalze und Harnstoff bei 150 °C nach 40 min ein, bei 200 °C nach 20 min und bei 250 °C nach 10 min. Werden derartige Formulierungen in eine heiße Injektionsbohrung beziehungsweise eine heiße Formation injiziert, besteht das hohe Risiko, dass die Gelbildung schon in der unmittelbaren Nahzone um die Injektionsbohrung herum einsetzt, da die Fließgeschwindigkeit der Formulierung in der Erdölformation meist so gering ist, dass die Formulierungen nach dem Injizieren sehr schnell aufgewärmt werden.

Somit erreichen die injizierten Formulierungen gar nicht die hoch permeablen Bereiche, die sie eigentlich blockieren sollen, sondern die viskosen Gele werden schon an der Injektionsbohrung beziehungsweise in der Bohrlochnahzone gebildet. Die hoch permeablen Bereiche in der Lagerstätte können jedoch eine Ausdehnung von mehreren 100 m aufweisen. Beim Einsatz der vorstehend beschriebenen Thermogel-Formulierungen wird somit nur die Permeabilität der Bohrlochnahzone reduziert.

Zurzeit ist es üblich, die Entwicklung von Lagerstätten mit viskosem Öl (> 30 mPa.s (> 30 cP)) mit folgenden Schritten durchzuführen: Wasserfluten und im Anschluss daran Dampffluten. Das Blockieren der hoch permeablen Kanäle während des Dampfflutens ist, wie vorstehend beschrieben, wegen der sehr hohen Temperaturen in der Umgebung der Injektionsbohrung technologisch schwierig zu realisieren.

Aufgabe der vorliegenden Erfindung war daher die Bereitstellung eines Verfahrens zur Förderung von Erdöl aus Erdölformationen, bei dem die Verwässerung der Produktion reduziert wird, der Entölungsgrad gestaltet wird und die hoch permeablen Kanäle in der Erdölformation während des Dampfflutens zuverlässig blockiert sind.

Diese Aufgabe wird gelöst durch ein Verfahren zur Förderung von Erdöl aus einer unterirdischen Erdöllagerstätte gemäß Anspruch 1.

Die Temperatur T_{L} der ölführenden Schicht liegt bei Schritt (1) bei 8 bis 60 °C.

Das erfindungsgemäße Verfahren hat den Vorteil, dass man durch tiefes Eindringen der Formulierung in die hochpermeablen Zonen auch in Lagerstätten mit niedriger Temperatur die Profilmodifikation des Flutens effizient realisieren kann. Das Verfahren ermöglicht, auch abgekühlte (beispielsweise durch Wasserfluten) ausgewaschene Gesteinszonen in der Lagerstätte zu blockieren. Der Abstand zwischen dem Bohrloch und dem Ort, an dem die Blockierung erfolgen soll, ist bei dem erfindungsgemäßen Verfahren regelbar. Hierdurch wird eine effiziente Blockierung hochpermeabler Zonen erreicht, die Verwässerung der Produktion verringert und der Entölungsgrad erhöht. Das erfindungsgemäße Verfahren eignet sich insbesondere, um bei der Entwicklung von Lagerstätten mit viskosem Erdöl nach Abschluss des Wasserflutens und vor Beginn des Dampfflutens eingesetzt zu werden, da die Formulierung in der durch das Wasserfluten abgekühlten Lagerstätte tief in die hoch permeablen Kanäle verpumpt werden kann und erst im Anschluss daran diese Kanäle beim Dampffluten durch die temperaturinduzierte Viskositätssteigerung blockiert werden.

Verzeichnis der Figuren:
- Figur 1: Schematische Darstellung des Temperaturverlaufs zwischen der Injektionsbohrung und Produktionsbohrungen in einer Erdöllagerstätte während des Dampfflutens (vertikaler Schnitt)
- Figur 2: Schematische Darstellung der vergelten Zone in der Lagerstätte (horizontaler Schnitt)
- Figur 3 a und b: Schematische Darstellung der vergelten Zone (zwei Varianten) in der Lagerstätte zwischen zwei Bohrungen (horizontaler Schnitt)
- Figur 4: Schematische Darstellung des Temperaturverlaufs zwischen der Injektionsbohrung und Produktionsbohrungen in einer Erdöllagerstätte während des indirekten Erwärmens der mit Formulierung F gefluteten Schicht (vertikaler Schnitt)
- Figur 5: Das gleiche wie bei Figur 4 mit Unterschied, dass die Formulierung F und der Wärmeträger durch unterschiedliche Bohrungen injiziert werden

Bezugszeichen:
- 1:: Injektionsbohrung
- 2:: Produktionsbohrung
- 3: hochpermeable Zone/Bereich
- 4:: Lagerstätte
- 5:: Temperaturverlauf
- 6:: Formulierung F, bei der die Viskositätserhöhung erfolgt ist ("Gelbank")
- 7:: ölführende Schicht L
- 8:: Schicht B
- 9:: nicht ölführende Zwischenschicht
- 10:: Formulierung F
- 11:: Wasserdampf

Zu der Erfindung ist im Einzelnen das Folgende auszuführen:
Bei dem erfindungsgemäßen Verfahren zur Förderung von Erdöl handelt es sich um ein Verfahren zur sekundären oder tertiären Erdölförderung, d.h. es wird angewandt, nachdem die primäre Erdölförderung aufgrund des Eigendrucks der Lagerstätte zum Erliegen gekommen ist und der Druck in der Lagerstätte durch Einpressen von Wasser und/oder Dampf aufrecht erhalten werden muss. Bei dem Verfahren werden hochpermeable Bereiche in einer erdölführenden Schicht blockiert.

### Lagerstätten

Bei den Lagerstätten kann es sich um Lagerstätten für alle Sorten von Öl handeln, beispielsweise um solche für leichtes oder für schweres Öl. In einer Ausführungsform der Erfindung handelt es sich bei den Lagerstätten um Schweröllagerstätten, d.h. Lagerstätten, welche Erdöl mit einem API-Grad von 964.8 bis 903.2 kg/m³ (15 bis 25° API) enthalten.

Bevorzugt weist das in der Erdöllagerstätte enthaltenen mit Öl eine Viskosität von mindestens 30 mPa.s (30 cP), besonders bevorzugt von mindestens 50 mPa.s (50 cP) auf, gemessen bei der Temperatur T_{L} der betreffenden erdölführenden Schicht L in der Lagerstätte.

Zur Ausführung des Verfahrens werden in mindestens eine ölführende Schicht der Erdöllagerstätte mindestens eine Produktionsbohrung und mindestens eine Injektionsbohrung abgeteuft. In der Regel wird eine ölführende Schicht mit mehreren Injektionsbohrungen und mit mehreren Produktionsbohrungen versehen.

### Verfahren

Erfindungsgemäß umfasst das Verfahren mindestens drei Verfahrensschritte (1), (2), und (3), welche in dieser Reihenfolge, aber nicht zwingend unmittelbar nacheinander ausgeführt werden. Das Verfahren kann selbstverständlich noch weitere Verfahrensschritte umfassen, die vor, während oder nach den Schritten (1), (2), und (3) ausgeführt werden können.

Das erfindungsgemäße Verfahren wird bevorzugt nach dem Wasserfluten durchgeführt. Dies heißt, dass vor Verfahrensschritt (1) Wasser oder auch wässrige Lösung in die mindestens eine Injektionsbohrung injiziert und Erdöl durch mindestens eine Produktionsbohrung entnommen wird. Unter "wässriger Lösung" versteht man in diesem Fall Mischungen, die vorwiegend aus Wasser und einem oder mehreren Additiven wie Wasserverdickungsmittel oder Tenside bestehen. Mit dem Begriff "Erdöl" ist in diesem Zusammenhang selbstverständlich nicht phasenreines Öl gemeint, sondern die üblichen, Öl und Formationswasser umfassenden Emulsionen, welche aus Erdöllagerstätten gefördert werden.

Das injizierte Wasser beziehungsweise die wässrige Formulierung hat üblicherweise eine natürliche Temperatur von 0 bis 60 °C, bevorzugt von 5 bis 30 °C. Die Wassertemperatur ist von der Jahreszeit und von geografischer Lage der Förderregion abhängig. Wenn die Lagerstätte warm ist und zum Wasserfluten Lagerstättenwasser verwendet wird, steigt auch die Temperatur des Flutwassers.

Durch die Injektion von Wasser beziehungsweise wässriger Lösung bildet sich im Bereich zwischen der Injektions- und der Förderbohrung eine Zone aus, in der Öl durch Wasser verdrängt wird.

Durch die Injektion von Wasser beziehungsweise wässriger Lösung kann sich die ursprüngliche Lagerstättentemperatur ändern, das heißt sie kann erhöht oder erniedrigt werden, je nachdem, ob das injizierte Wasser bzw. die wässrige Lösung eine höhere oder niedrigere Temperatur als die ursprüngliche Temperatur der Lagerstätte aufweist.

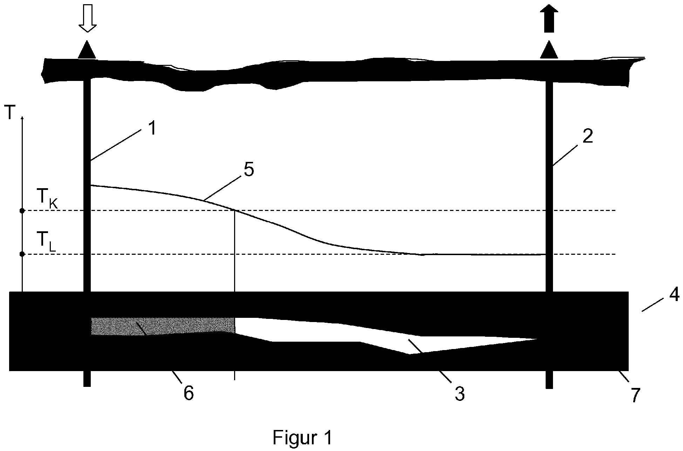

Durch die Injektion von Wasser beziehungsweise wässriger Lösung steigt der Druck in der Lagerstätte und es bilden sich im Bereich zwischen der Injektions- und der Förderbohrung Zonen ((3), siehe Figuren 1 bis 5) aus, in denen Öl durch Wasser beziehungsweise wässrige Lösung verdrängt wird. Diese Zonen (3) sind durch hohe oder relativ hohe Permeabilitäten charakterisiert. Diese Zonen (3) werden auch als wasserführende "Kanäle" bezeichnet. In diesen Kanälen ist der Fließwiderstand reduziert und das injizierte Wasser fließt durch die Kanäle von der Injektionsbohrung zur Produktionsbohrung. Dadurch wird der Verdrängungseffekt des Flutwassers wesentlich reduziert, infolgedessen steigt die Produktionsverwässerung und die Entölung der Lagerstätte wird vermindert. Diese negativen Effekte sind besonders ausgeprägt bei der Entwicklung von Lagerstätten mit viskosem Öl, da viskoses Öl schwer zu mobilisieren ist. Hoch permeable Zonen müssen aber nicht zwingend durch das Wasserfluten erzeugt werden, sondern können auch natürlicherweise in einer Formation vorhanden sein. Wenn als Flutwasser wässrige Lösung enthaltend Wasserverdickungsmittel oder Tenside verwendet wird, können die erwähnten negativen Effekte etwas reduziert werden, letztendlich wird das Flutwasser jedoch immer den Weg mit dem kleinsten Fließwiderstand zwischen der Injektionsbohrung und der Produktionsbohrung finden. Daher werden im besten Fall nach Vollendung des Wasserflutens nur 10 bis 40 % des Erdöls gewonnen.

Wenn die Produktionsverwässerung relativ schnell nach dem Beginn des Wasserflutens steigt, ist dies ein eindeutiges Indiz zum Wasserdurchbruch. Bei einem Wasserdurchbruch strömt Wasser durch hochpermeable Zonen von der Injektionsbohrung bis zur Produktionsbohrung.

### Verfahrensschritt (1)

Verfahrensschritt (1) kann angewandt werden, sobald die Produktion zu stark verwässert wird oder ein sogenannter Wasserdurchbruch registriert wird. Verfahrensschritt (1) kann dabei unmittelbar nach Wasserfluten durchgeführt werden.

Zur Vorbereitung von Verfahrensschritt (1) kann es vorteilhaft sein, die Temperatur im Bereich der Injektionsbohrung zu messen und das Temperaturfeld der erdölführenden Schicht L im Bereich, der unter Einfluss des Flutens steht, zu bestimmen. Methoden zur Ermittlung des Temperaturfeldes einer Erdöllagerstätte sind dem Fachmann prinzipiell bekannt. Die Temperaturverteilung wird in der Regel durch Temperaturmessungen an bestimmten Stellen der Formation in Kombination mit Simulationsrechnungen bestimmt, wobei man bei den Simulationsrechnungen unter anderem in die Formation eingebrachte Wärmemengen sowie die aus der Formation abgeführten Wärmemengen berücksichtigt. Alternativ kann jeder der Bereiche auch durch seine Durchschnittstemperatur charakterisiert werden. Für den Fachmann ist klar, dass die geschilderte Analyse der Temperaturfeldes nur eine Annäherung der tatsächlichen Verhältnisse in der Formation darstellt.

Erfindungsgemäß weist die erdölführende Schicht L bei Verfahrensschritt (1) eine Temperatur von 8 bis 60 °C, bevorzugt im Bereich von 8 bis 50 °C auf, gemessen an der Injektionsbohrung.

Im Zuge von Verfahrensschritt (1) wird in hoch permeable Zonen der Erdöllagerstätte im Bereich zwischen mindestens einer Injektionsbohrung und mindestens einer Produktionsbohrung mindestens eine wässrige Formulierung F, die bei oder oberhalb einer kritischen Temperatur Tₖ eine Viskositätserhöhung zeigt, durch die mindestens eine Injektionsbohrung in die erdölführende Schicht L injiziert.

Die Viskositätserhöhung der wässrigen Formulierung erfolgt oberhalb der kritischen Temperatur T_{K} durch Gelbildung.

Die wässrige Formulierung enthält neben Wasser eine oder mehrere verschiedene chemische Komponenten, die bei Erreichen der kritischen Temperatur T_{K} zu einer Viskositätserhöhung führen. Üblicherweise enthält die wässrige Formulierung mindestens zwei verschiedene Komponenten. Hierbei kann es sich sowohl um anorganische als auch um organische Komponenten handeln sowie um Kombinationen aus anorganischen und organischen Komponenten.

Erfindungsgemäß wird als Formulierung F eine Formulierung eingesetzt, die bei der Temperatur T_{K} oder darüber ein Gel bildet.

Geeignete Formulierungen sind dem Fachmann bekannt, beispielsweise Formulierungen auf Basis wasserlöslicher Polymere wie in US 4,844,168, US 6,838,417 B2, oder US 2008/0035344 A1. Formulierungen im Wesentlichen auf Basis anorganischer Komponenten sind beispielsweise in SU 1 654 554 A1, US 4,889,563, RU 2066743 C1, WO 2007/135617, US 7,273,101 B2 oder RU 2 339 803 C2 beschrieben. Geeignete Formulierungen sind auch kommerziell erhältlich.

Gemäß einer bevorzugten Ausführungsform enthält die mindestens eine wässrige Formulierung F mindestens eine Verbindung M ausgewählt aus Metallverbindungen und Halbmetallverbindungen, die bei Versetzen mit Base Gele bilden können, und mindestens einen wasserlöslichen Aktivator, der bei einer Temperatur von mindestens T_{K} eine Erhöhung des pH-Werts der wässrigen Formulierung bewirkt.

Erfindungsgemäß bevorzugt ist die mindestens eine Verbindung M ausgewählt aus wasserlöslichen Aluminium(III)salzen, kolloidalen Si-Verbindungen und Mischungen davon, die bei Versetzen mit Base Gele bilden können. Als Variante können auch Mischungen auf Basis von organischen Produkten (z.B. Zelluloseether) verwendet werden. Besonders bevorzugt ist die mindestens eine Verbindung M ausgewählt ist aus Aluminiumchlorid, Aluminiumnitrat, Aluminiumacetat, Aluminiumacetylacetonat, Aluminiumsulfat, deren Teilhydrolysaten, kolloidalem SiO₂ und Mischungen davon. Teilhydrolysate von Aluminiumsalzen sind teilweise hydrolysierte Aluminiumsalze, beispielsweise Aluminiumhydroxychlorid. Der pH-Wert der Formulierung F liegt in der Regel bei ≤ 5, bevorzugt ≤ 4.

Bei den kolloidalen Si-Verbindungen handelt es sich bevorzugt um kolloidales SiO₂, welches vorteilhafterweise eine durchschnittliche Partikelgröße von 4 nm bis 300 nm aufweisen sollte. Die spezifische Oberfläche des SiO₂ kann beispielsweise 100 bis 300 m²/g betragen.

Als wasserlösliche Aktivatoren kommen alle Verbindungen infrage, die beim Erwärmen auf eine bestimmte Temperatur in wässrigem Medium Basen freisetzen beziehungsweise Säuren binden und somit für eine Erhöhung des pH-Werts der Lösung/Formulierung sorgen. Als wasserlösliche Aktivatoren können beispielsweise Harnstoff, substituierter Harnstoff wie N,N'-Dimethylharnstoff, Hexamethylentetramin, Cyanate und Mischungen davon eingesetzt werden. Harnstoff beispielsweise hydrolysiert in wässrigem Medium zu Ammoniak und CO₂.

Besonders bevorzugt enthält die wässrige Lösung F mindestens eine Verbindung ausgewählt aus Aluminiumchlorid, Aluminiumnitrat, Aluminiumacetat, Aluminiumacetylacetonat, Aluminiumsulfat, deren Teilhydrolysaten, und Mischungen davon und mindestens einen wasserlöslichen Aktivator ausgewählt aus Harnstoff, substituiertem Harnstoff, Hexamethylentetramin, Cyanaten und Mischungen davon.

Durch die Erhöhung des pH-Werts bilden sich hochviskose, wasserunlösliche Gele, die Metallionen, Hydroxid-Ionen sowie gegebenenfalls noch weitere Komponenten umfassen. Im Falle der Verwendung von Aluminiumverbindungen kann sich Aluminiumhydroxid beziehungsweise Aluminiumoxidhydratgel bilden, das selbstverständlich noch weitere Komponenten, beispielsweise die Anionen des eingesetzten Aluminiumsalzes umfassen kann.

Neben Wasser kann die Formulierung F optional noch weitere, mit Wasser mischbare organische Lösungsmittel umfassen. Beispiele derartiger Lösungsmittel umfassen Alkohole. In der Regel sollte die Formulierung F mindestens 80 Gew.-% Wasser, bezogen auf die Summe aller Lösungsmittel in der Formulierung F umfassen, bevorzugt mindestens 90 Gew.-% und besonders bevorzugt mindestens 95 Gew.-%. Ganz besonders bevorzugt wird lediglich Wasser als Lösungsmittel eingesetzt.

Die Konzentration der eingesetzten Metallverbindungen wird vom Fachmann so gewählt, dass sich ein Gel mit der gewünschten Viskosität bildet. Dazu wird die mindestens eine wasserlösliche Aktivator in einer solchen Konzentration eingesetzt, dass sich eine ausreichende Menge Base bilden kann, um den pH-Wert so weit abzusenken, dass tatsächlich ein Gel ausfallen kann. Weiterhin kann über die Mengen beziehungsweise die Mengenverhältnisse auch die Gelbildungszeit t_{Gel} bestimmt werden. Je höher die Konzentration des Aktivators, desto größer ist - bei gegebener Konzentration der Metallverbindung - die Geschwindigkeit der Gelbildung. Diesen Zusammenhang kann der Fachmann nutzen, um die Gelbildungszeit gezielt zu beschleunigen oder zu verlangsamen. Die Geschwindigkeit der Gelbildung nach dem Überschreiten der kritischen Temperatur T_{K} wird naturgemäß auch von der in der Erdöllagerstätte herrschenden Temperatur bestimmt. Im Falle von Aluminiumsalzen hat sich eine Menge von 0,2 bis 3 Gew.-% Aluminium (III), bezogen auf die wässrige Formulierung, als vorteilhaft erwiesen. Die Menge des mindestens einen wasserlöslichen Aktivators sollte dabei zumindest so bemessen werden, dass 3 mol Base pro mol Al(III) freigesetzt werden.

Es wird z.B. eine anorganische Mischung aus 8 Gew.-% AlCl₃ (gerechnet als wasserfreies Produkt, dies entspricht 1,6 Gew.-% Al(III)), 25 Gew.-% Harnstoff sowie 67 Gew.-% Wasser verwendet. Unter Berücksichtigung der Verdünnung der Mischung in der geologischen Schicht werden die maximalen Konzentrationen der Komponenten gewählt und zwar 17 Gew.-% AlCl₃ , 34 Gew.-% Harnstoff und Rest ist Wasser. Bei diesen Konzentrationen ist sogar bei 8-fachem Verdünnen der Mischung die Bildung des Gels bei Temperatursteigerung garantiert. Beim Verpressen der Formulierung in die geologische Schicht findet die intensive Verdünnung vorwiegend am Rande der gefluteten Zone statt. Dadurch wird die Fähigkeit der Formulierung, bei Temperatursteigerung ein Gel zu bilden, erhalten. Da die obenbeschriebene anorganische Mischung eine echte Lösung ist, ist die Sedimentation, Bildung von Flocken oder Vergelung in der geologischen Schicht vor der Temperatursteigerung ausgeschlossen. Die anorganische wässrige Lösung auf Basis von Harnstoff und Aluminiumsalz kann monatelang aufbewahrt werden, ohne dass sich ihre Eigenschaften ändern.

Die erfindungsgemäße Formulierung F ist unterhalb der kritischen Temperatur T_{K} kein Gel. Erst bei oder oberhalb der kritischen Temperatur T_{K} bildet die Formulierung F die Eigenschaften eines Gels aus.

Unter Gel in Bezug auf die Formulierung F wird vorliegend verstanden, dass die Formulierung F nach dem Vergelen unter den Lagerstättenbedingungen eine deutlich höhere Viskosität aufweist als vor dem Vergelen, vorzugsweise im Bereich von 200 bis 5000 mPa.s (200 bis 5000 cP), bevorzugt im Bereich von 400 bis 3000 mPa.s (400 bis 3000 cP) und insbesondere im Bereich von 500 bis 2000 mPa.s (500 bis 2000 cP). Die Viskosität wird dabei bei Scherraten im Bereich von 0,5 bis 1,5 s⁻¹ unter den Lagerstättenbedingungen gemessen. Die Formulierung F weist in vergelter Form in der Regel eine Fließgrenze auf.

In unvergeltem Zustand ist die erfindungsgemäße Formulierung F kein Gel. Hierunter wird verstanden, dass sie vor dem Vergelen eine deutlich niedrigere Viskosität aufweist als nach dem Vergelen, vorzugsweise im Bereich von 5 bis 100 mPa.s (5 bis 100 cP), bevorzugt im Bereich von 7 bis 70 mPa.s (7 bis 70 cP) und insbesondere im Bereich von 10 bis 50 mPa.s (10 bis 50 cP). In unvergeltem Zustand weist die Formulierung F in der Regel keine Fließgrenze oder eine Fließgrenze, die deutlich unter der im vergelten Zustand liegt, auf.

Dies hat den Vorteil, dass die Formulierung F vor dem Vergelen tief in hochpermeable Zonen verpresst werden kann und nach dem Vergelen die hochpermeablen Zonen effektiv blockiert.

Gemäß einer bevorzugten Ausführungsform wird beim Verpumpen der wässrigen Formulierung F als erste Portion die Formulierung F mit maximal möglicher Komponentenkonzentration verpresst. Danach kann die Komponentenkonzentration stufenweise oder kontinuierlich reduziert werden. Dies garantiert die Vergelung der Formulierung F, wenn auch unterirdisch Verdünnung statt findet. Wenn beispielsweise die Formulierung F auf Basis von Harnstoff und Aluminiumsalz mit maximaler Komponentenkonzentration verpresst wird, ist eine 8-fache Verdünnung mit Wasser ohne Beeinträchtigung der Geleigenschaften erlaubt.

In der nachfolgenden Tab. 1 ist exemplarisch die Zeit bis zur Gelbildung für eine Mischung aus 8 Gew.-% Aluminiumchlorid (gerechnet als wasserfreies Produkt, entspricht 1,6 Gew.-% Al(III)), 25 Gew.-% Harnstoff sowie 67 Gew.-% Wasser dargestellt.

**Tab. 1**

| Temperatur [°C] | 100 | 90 | 80 | 70 | 60 |
|---|---|---|---|---|---|
| Zeit der Gelbildung [Tage] | 1/4 | 1 | 3 | 6 | 30 |

Die Formulierungen F können darüber hinaus noch weitere Komponenten umfassen, welche die Gelbildung beschleunigen oder verlangsamen können. Beispiele hierfür umfassen weitere Salze oder Naphthensäuren. Weiterhin können die Formulierungen F auch Tenside und/oder Verdicker umfassen, beispielsweise verdickend wirkende Polymere. Als verdickend wirkende Polymere können beispielsweise Polyacrylamid, Xantan oder andere Biopolymere auf Polysaccharid-Basis zugegeben werden. Üblicherweise wird der Formulierung F soviel Verdicker zugegeben, dass die Viskosität der Formulierung geringfügig beispielsweise bis zu 20 bis 40 mPa.s (20 bis 40 cP) angehoben wird. Dies stört das Verpumpen der Formulierung in die Lagerstätte nicht. Durch den Verdicker wird das erforderliche Volumen an Formulierung reduziert, da die viskose Formulierung vorwiegend in die hoch permeablen Bereiche/Kanäle (3) eindringt und dort sozusagen "deponiert" wird. Durch die Verdickung der injizierten Formulierung wird auch ihre Verdünnung in der geologischen Schicht wesentlich reduziert, da die Mischbarkeit der Medien mit unterschiedlicher Viskosität kleiner ist als bei der Medien mit gleicher Viskosität und das Schichtwasser aus den hochpermeablen Zonen durch die viskose Masse verdrängt wird.

Die vorstehend beschriebenen bevorzugten Formulierungen F enthaltend mindestens eine Verbindung M ausgewählt aus Metallverbindungen und Halbmetallverbindungen, die beim Versetzen mit Basen Gele bilden können, sowie mindestens einen wasserlöslichen Aktivator weisen den Vorteil auf, dass anorganische Gele gebildet werden. Diese Gele bilden sich bei ca. 70°C und sind bis zu Temperaturen von 300 °C stabil und eignen sich daher besonders gut für Lagerstätten mit sehr hohen Temperaturen wie beispielsweise Lagerstätten am Ende des Dampfflutens. Weiterhin können die anorganischen Gele bei Bedarf auch wieder sehr leicht aus der Formation entfernt werden, indem man Säure in die Formation injiziert und die Gele auflöst.

Die kritische Temperatur T_{K} der vorstehend beschriebenen bevorzugten Formulierungen F enthaltend mindestens eine Verbindung M ausgewählt aus Metallverbindungen und Halbmetallverbindungen die beim Versetzen mit Basen Gele bilden können, sowie mindestens einen wasserlöslichen Aktivator ist die Gelbildungstemperatur der jeweiligen anorganischen Komponente. Bei diesen Formulierungen liegt T_{K} bei 60 bis 70 °C. Diese Formulierungen eignen sich daher gut, um nach der Vollendung des Wasserflutens und vor Beginn des Dampfflutens eingesetzt zu werden.

Verfahrensschritt (1) kann direkt vor Beginn des Dampfflutens (Verfahrensschritt (2)) durchgeführt werden, er kann jedoch auch einige Zeit vor Beginn des Verfahrensschritts (2) durchgeführt werden. Beispielsweise sind die bevorzugt eingesetzten wässrigen Formulierungen F enthaltend mindestens eine Verbindung M ausgewählt aus Metallverbindungen und Halbmetallverbindungen, die bei Versetzen mit Base Gele bilden kann, und mindestens einen wasserlöslichen Aktivator, der bei einer Temperatur von mindestens T_{K} eine Erhöhung des pH-Werts der wässrigen Formulierung bewirkt, so genannte echte Lösungen und können sich monatelang in der Lagerstätte befinden, ohne ihre Aktivität zu verlieren. Das heißt, sie zeigen auch nach monatelanger Lagerung in der Lagerstätte bei Erhöhung auf eine Temperatur von mindestens T_{K} eine Viskositätserhöhung.

In Verfahrensschritt (1) wird mindestens eine wässrige Formulierung F in mindestens eine Injektionsbohrung injiziert. Es können jedoch auch mehr als eine wässrige Formulierung F injiziert werden, beispielsweise können nacheinander Portionen von zwei oder mehr unterschiedlichen wässrigen Formulierungen injiziert werden. Als erster Formulierung kann dabei beispielsweise eine preiswerte Lösung eines organischen Thermogele auf Basis von Zelluloseethern injiziert werden. Die Formulierung bildet bei Temperaturen von 70 bis 80 °C ein Gel und bleibt unter Tage bis zu Temperaturen von 180 bis 200 °C stabil. Als zweite Formulierung kann eine der vorstehend beschriebenen wässrigen Formulierungen F, die mindestens eine Verbindung ausgewählt aus Metallen und Halbmetallen sowie mindestens einen wasserlöslichen Aktivator (insbesondere Harnstoff) enthält, eingesetzt werden. Diese Formulierungen sind die bei Temperaturen von 60 bis 70 °C aktiv und bleiben unter Tage bis zu Temperaturen von 280 bis 300 °C stabil.

Wenn der Abstand zwischen der mindestens einen Injektionsbohrung und der mindestens einen Produktionsbohrung relativ groß ist, kann, um die Kosten zu reduzieren, nur ein Drittel oder die Hälfte der Gesamtlänge der zwischen der Injektionsbohrung und der Produktionsbohrung befindlichen Kanäle mit der wässrigen Formulierung gefüllt werden. In den meisten Fällen reicht dies aus, um eine effiziente Profilmodifikation durchzuführen.

Die Menge an Formulierung F wird nach geologisch-technischer Analyse des Lagerstätteabschnittes bestimmt. In den meisten Fällen wird die Menge an Formulierung F durch Errechnung der Wirtschaftlichkeitsgrenze der Maßnahmen definiert. Wenn die Wasserdurchbrüche vorwiegend durch die geologischen Störungen bestimmt sind und der Abstand zwischen Injektionsbohrung und der Produktionsbohrungen klein ist, dann ist der Bedarf an wässriger Formulierung F relativ niedrig. Da durch geophysikalische Untersuchungen nur ein Teil der Störungen entdeckt werden kann, sind die Berechnungen des notwendigen Volumens von Formulierung F sehr unsicher. Die beste Methode ist in diesem Fall das Identifizieren des Austrittes der Formulierung F in den benachbarten Bohrungen durch chemische Analyse des Nassöls. Das Verpumpen der Formulierung F wird nach dem Identifizieren der Formulierung F in den benachbarten Bohrungen abgebrochen. Geschätzte Menge an Formulierung F ist für obenerwähnte Lagerstätte ca. 100 bis 200 m³ pro Meter der Mächtigkeit der ölführenden Schicht.

Wenn die hochpermeablen Bereiche in der Erdöllagerstätte z.B. schichtartige Form aufweisen (die Permeabilität der Matrix ist nicht homogen), dann ist der Bedarf an wässriger Formulierung F wesentlich größer. In diesem Fall wird nur ein Teil der hochpermeablen Zonen mit Formulierung F gesättigt. Hier kommen die ökonomischen Faktoren ins Spiel. Für eine effiziente Durchführung des Verfahrens sollte das Volumen der injizierten Formulierung F (Schätzung) mindestens 10 % des geschätzten Porenvolumens (bezogen auf die hochpermeablen Bereiche/Schichten) in der Erdöllagerstätte zwischen Injektionsbohrung und Produktionsbohrung betragen, bevorzugt mindestens 20 %, besonders bevorzugt mindestens 30 %.

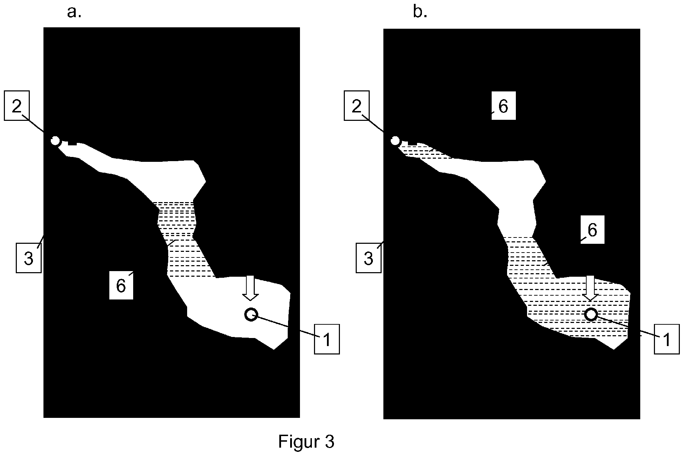

Dem gleichen Zweck dient eine Variante des vorliegenden Verfahrens, in dem direkt nach dem Injizieren der wässrigen Formulierung mit Wasser nachgeflutet wird. Durch das Nachfluten mit Wasser wird die Front mit der wässrigen Formulierung in Richtung Mitte der hoch permeablen Bereiche verschoben. Beim Dampffluten bildet sich dann im mittleren Bereich der hoch permeablen Kanäle der hochviskose Bereich aus. Diese Variante des erfindungsgemäßen Verfahrens ist in Figur 3a schematisch dargestellt.

Während die wässrige Formulierung F in mindestens eine Injektionsbohrung injiziert wird, kann aus mindestens einer Produktionsbohrung Erdöl entnommen werden. Gemäß einer bevorzugten Ausführungsform wird während Verfahrensschritt (1) Erdöl aus der mindestens einen Produktionsbohrung entnommen und sobald in dem entnommenen Erdöl wässrige Formulierung F detektiert wird, die durch die mindestens eine Injektionsbohrung injiziert wurde, wird mit Verfahrensschritt (2) begonnen.

Gemäß einer weiteren Variante des vorliegenden Verfahrens wird während Verfahrensschritt (1) Erdöl aus mindestens einer Produktionsbohrung entnommen und sobald in dem entnommenen Erdöl wässrige Formulierung F detektiert wird, die durch die mindestens eine Injektionsbohrung injiziert wurde, wird aus dieser Produktionsbohrung zeitweise kein Erdöl entnommen. Vorzugsweise wird dabei so lange kein Erdöl entnommen, bis Verfahrensschritt (2) begonnen wird.

### Verfahrensschritt (2)

Im Anschluss an Verfahrensschritt (1) wird in Verfahrensschritt (2) mindestens ein Teil der injizierten wässrigen Lösung direkt (Variante 1) und/oder indirekt (Variante 2) durch Injizieren von Wasserdampf in die Erdöllagerstätte erwärmt. Erfindungsgemäß weist der verwendete Wasserdampf eine Temperatur von 200 bis 350 °C auf. Das Injizieren von Wasserdampf in eine Injektionsbohrung ist dem Fachmann bekannt, ebenso die dafür geeignete Ausrüstung. Dieser Schritt ist auch unter der Bezeichnung Dampffluten bekannt. Das Dampffluten kann mit der konventionellen, dem Fachmann bekannten Technik durchgeführt werden.

### Variante 1

Beim direkten Erwärmen wird der Wasserdampf direkt in die erdölführende Schicht L injiziert, in die in Schritt (1) die wässrige Formulierung F injiziert wurde (Variante 1). Gemäß einer bevorzugten Ausführungsform wird dazu Wasserdampf durch die mindestens eine Injektionsbohrung in die mindestens eine ölführende Schicht injiziert. Der Wasserdampf wandelt sich in der Lagerstätte relativ schnell in Dampfkondensat um. Der Bereich, in dem die Kondensation stattfindet, befindet sich üblicherweise in einem Radius von 5 bis 40 m von der Injektionsbohrung. Der heiße Wasserdampf/Dampfkondensat versucht, durch die bereits beim Wasserfluten geschaffenen oder bereits vorher bestehenden hoch permeablen Kanäle zur Produktionsbohrung zu fließen. Diese Kanäle sind jedoch in Verfahrensschritt (1) mit der wässrigen Formulierung F gefüllt worden. Die Formulierung wird durch den Wasserdampf/Dampfkondensat in Richtung Produktionsbohrung verschoben. Unter der Einwirkung des heißem Wasserdampfs/Dampfkondensats steigt die Temperatur in der ölführenden Schicht L und in der Lagerstätte. Dabei wird die wässrige Formulierung ebenfalls erwärmt, bis beim Erreichen der kritischen Temperatur T_{K} die Viskosität der Formulierung F deutlich ansteigt, beispielsweise durch Bildung eines hochviskosen Gels. Je länger die ölführende Schicht L mit dem Wasserdampf geflutet wird, desto größer wird das Volumen in der ölführenden Schicht L, das mit der Formulierung F gefüllt ist und in dem die Viskositätserhöhung stattgefunden hat. Die hoch permeablen Kanäle werden somit "verstopft". Der weitere injizierte heiße Wasserdampf und das entstehende heiße Dampfkondensat fließt dann in die Bereiche, die bei der vorherigen Erdölförderung, beispielsweise beim Wasserfluten nicht entölt worden waren.

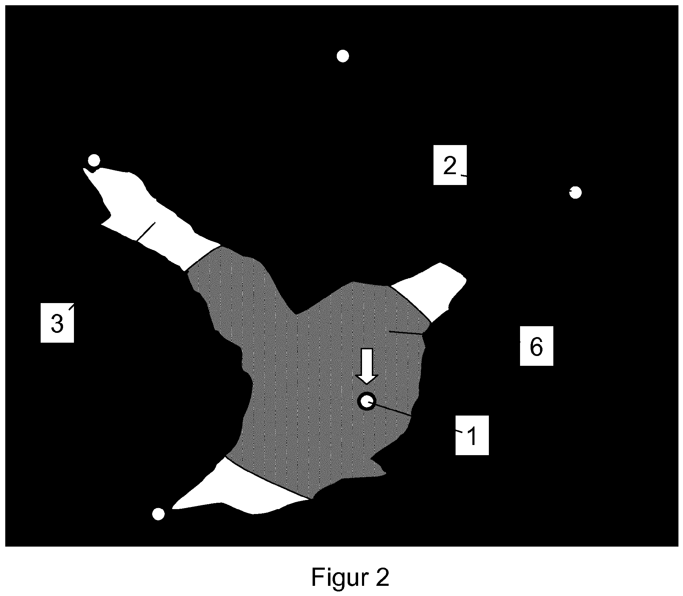

Eine schematische Darstellung des Temperaturverlaufs (5) und eines vertikalen Schnitts einer erdölführenden Schicht in einer Lagerstätte nach Beginn des Dampfflutens ist in Figur 1 dargestellt. In dem Bereich der hochpermeablen Kanäle (3), in denen die Temperatur T_{L} der erdölführenden Schicht über der kritischen Temperatur T_{K} der Formulierung liegt, hat eine Viskositätserhöhung durch Bildung eines Gels stattgefunden, siehe Bereich (6). In Figur 2 ist ein horizontaler Schnitt durch die erdölführende Schicht L in der Erdöllagerstätte zu sehen, in dem die Verteilung des Bereichs (6), in dem die Viskositätserhöhung erfolgt ist, der hochpermeablen Kanäle (3) sowie die Injektionsbohrung (1) und mehrere Produktionsbohrungen (2) gezeigt ist.

Eine andere Option dieser Variante ist, nach Erwärmen der Lagerstättezonen, die mit Formulierung gesättigt sind, auf die kritischen Temperatur T_{K} vom Dampffluten wieder auf das Wasserfluten umzusteigen. Bei dieser Option wird das Dampffluten nur eingesetzt, um die Viskositätserhöhung der Formulierung durchzuführen. Diese Option kann insbesondere bei Entwicklung von Lagerstätten mit Olviskosität von ca. 20 bis 50 mPa.s (20 bis 50 cP) ververwendet werden.

Eine weitere Option dieser Variante ist, Wärmeträger (Dampf/Dampfkondensat) und Formulierung F gleichzeitig in mindestens zwei unterschiedliche Bohrungen zu verpressen. Bei dieser Option bewegen sich Wärmeträger und die Formulierung F in der Lagerstätte aufeinander zu.

### Variante 2

Beim indirekten Erwärmen mindestens eines Teils der injizierten wässrigen Formulierung F wird der Wasserdampf in mindestens eine weitere Schicht B, die in thermischem Kontakt mit der erdölführenden Schicht L steht, injiziert. Bei der Schicht B handelt es sich es sich vorzugsweise ebenfalls um eine erdölführende Schicht, die die gleiche Sorte bzw. Qualität Erdöl enthalten kann wie Schicht L, jedoch auch Erdöl anderer Sorten bzw. Qualität. "In thermischem Kontakt stehend" bedeutet vorliegend in Bezug auf die Schichten L und B, dass zwischen ihnen Wärme übertragen werden kann. Dabei liegen sie so nahe beieinander, dass bei Injizieren von Wasserdampf in die Schicht B eine Wärmemenge in Schicht L übertragen wird, die ausreicht, um mindestens einen Teil der in die Schicht L injizierten wässrigen Formulierung F auf mindestens T_{K} zu erwärmen.

Die Verfahrensvariante 2 wird vorzugsweise bei einer Öllagerstätte angewandt, die mindestens zwei ölführende Schichten umfasst, die in thermischem Kontakt miteinander stehen. In einem solchen Fall weisen die ölführenden Schichten oft unterschiedliche Eigenschaften auf. Dies betrifft z. B. Permeabilität, Porosität und Ölviskosität, Schichtendruck. Wegen dieser unterschiedlichen Eigenschaften ist die gleichzeitige Ölgewinnung aus mehreren Schichten oft erschwert oder unmöglich.

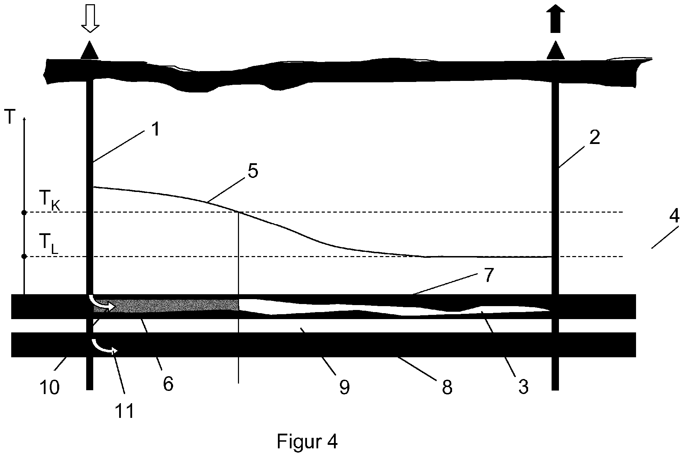

In Figur 4 ist schematisch eine solche Lagerstätte mit zwei ölführenden Schichten dargestellt. Die Schicht 7 hat eine relativ hohe Permeabilität und ist mit Öl gesättigt, das durch Wasserfluten gefördert werden kann. Diese Schicht (7) wird als erste entwickelt, indem sie mit Wasser geflutet wird. Da die Permeabilität der Schicht (7) nicht homogen ist, werden nach bestimmter Zeit in den Produktionsbohrungen (2) Wasserdurchbrüche registriert. Wegen des schnellen Anstiegs der Produktionsverwässerung wird die Entscheidung getroffen, die Förderung aus der Schicht (7) für eine gewisse Zeit einzustellen. Vor dem Einstellen der Ölförderung aus der Schicht (7) wird diese Schicht mit wässriger Formulierung F geflutet. Dadurch werden die hochpermeablen Kanäle, die die Wasserdurchbrüche ermöglichen, in der Schicht (7) mit der Formulierung F gefüllt. Die kritische Temperatur T_{K} der wässrigen Formulierung F liegt oberhalb der Temperatur T_{L} der Schicht (7).

Danach wird mit Dampffluten die untere ölführende Schicht (8) entwickelt. In dieser Schicht befindet sich viskoses Öl, das nur durch Dampffluten effizient aus dieser Schicht gefördert werden kann. Beim Dampffluten der Schicht (8) wird nicht nur Schicht (8) erwärmt, sondern auch die nicht ölführende Zwischenschicht (9) und die daran angeschlossene Schicht (7). Bei Steigerung der Temperatur in Schicht (7) bis zu Temperatur T_{K} beginnt die Viskositätserhöhung der Formulierung F und die hochpermeablen Zonen werden mit viskoser Formulierung teilweise oder völlig verfüllt. Nach Vollendung der Viskositätserhöhung wird die Schicht 7 weiter mit Wasser geflutet.

Die Zwischenschicht (9) kann 1 bis 5 Meter dick sein. Beim Verpressen von 300 bis 600 Tonnen Dampf pro Tag mit einer Temperatur von ca. 300 °C erreicht die Temperatur der Schicht (7) in ein paar Monaten die Temperatur T_{K}. Um die Viskositätserhöhung zu beschleunigen, kann eine wässrige Formulierung F mit niedrigerer kritischer Temperatur einsetzen, um den Unterschied zwischen Temperatur T_{K} und Temperatur T_{L} der Schicht 7 zu verringern.

Als wässrige Formulierung F können anorganische und organische Kompositionen verwendet werden, deren Temperatur T_{K} regelbar ist. Zum Beispiel kommen die bekannten anorganischen Mischungen auf Basis von Harnstoff, Aluminiumsalz und Urotropin oder die organischen Mischungen auf Basis von Methylcellulose und Harnstoff in Frage.

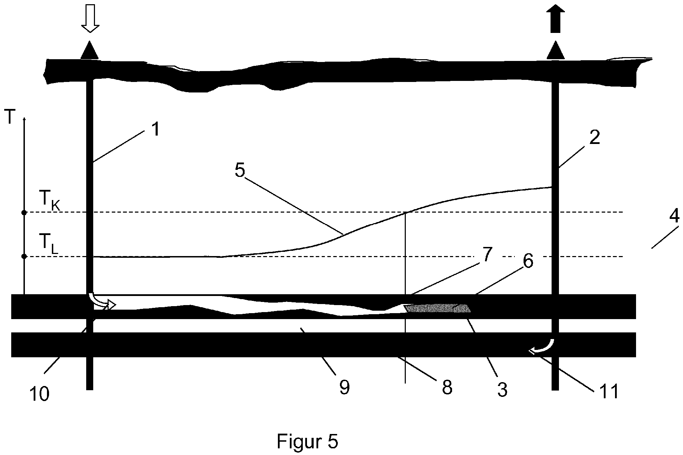

Die Variante 2 kann nach folgenden Schemata durchgeführt werden:
**Schema** 1: Wasserfluten der Schicht L → anschließendes Fluten der Schicht L mit wässriger Formulierung F (nach Steigerung der Produktionsverwässerung) → Einstellen des Flutens der Schicht L und anschließendes Dampffluten der Nachbarschicht B → Wiederaufnahme des Wasserflutens der Schicht L nach Steigerung der Temperatur dieser Schicht auf mindestens T_{K}.
Schema 2: Wasserfluten der Schicht L → anschließendes Fluten der Schicht L (nach Steigerung der Produktionsverwässerung) mit wässriger Formulierung F und gleichzeitiges Dampffluten der Nachbarschicht B → Wiederaufnahme des Wasserflutens der Schicht L nach Steigerung der Temperatur dieser Schicht auf mindestens T_{K}.
   Nach Schema 2 wird die Füllung der hochpermeablen Zonen mit wässriger Formulierung F gleichzeitig mit Dampffluten der Nachbarschicht durchgeführt. Da die Temperaturübertragung von der dampfgefluteten Schicht in die wassergeflutete Schicht langsam ist, lässt sich Schema 2 leicht realisieren.
Schema 3 (Figur 5): Wasserfluten der Schicht L → anschließendes Fluten der Schicht L (nach Steigerung der Produktionsverwässerung) mit wässriger Formulierung F und gleichzeitiges oder nicht gleichzeitiges Dampffluten der Nachbarschicht B durch andere Bohrung → Wiederaufnahme des Wasserflutens der Schicht L nach Steigerung der Temperatur dieser Schicht auf mindestens T_{K}.

Wenn der Unterschied zwischen T_{L} (Temperatur der Schicht 3) und T_{K} relativ gross ist, wird während des Dampfflutens der Schicht 8 (Figur 4, 5) die Temperatursteigerung der Schicht 3 kontrolliert/gemessen und das Verpumpen der Formulierung F in die Schicht 3 wird erst bei einer Temperaturdifferenz (T_{K} - T_{L}) von 1 bis 5 °C begonnen.

Nach dem Einstellen des Flutens der Schicht 7 ist die Bewegung der injizierten Flüssigkeiten (wässrige Formulierung F und ggf. zum Nachfluten eingesetztes Wasser) minimal und das "Auswaschen" der wässrigen Formulierung F ist ausgeschlossen. Die wässrige Formulierung F wird in dem Gesteinmassiv gespeichert. Die Eigenschaften der wässrigen Formulierung F bleiben unverändert mehrere Monate erhalten. Die vorstehend erwähnten anorganischen Formulierungen sind s. g. echte Lösungen und neigen nicht zur Bildung von Sedimenten oder zum Ausflocken.

Gemäß einer weiteren Ausführungsform wird in diejenigen Produktionsbohrungen, in deren entnommenem Erdöl wässrige Formulierung F detektiert wird, die durch die mindestens eine Injektionsbohrung injiziert wurde, vor Verfahrensschritt (3) Wasserdampf injiziert. Auf diese Weise wird im Nahbereich der jeweiligen Produktionsbohrung ebenfalls eine Profilmodifikation durchgeführt und die hoch permeablen Kanäle verschlossen. Diese Ausführungsform des erfindungsgemäßen Verfahrens ist in Figur 3b schematisch dargestellt. Der in die Produktionsbohrungen injizierte Wasserdampf weist bevorzugt eine Temperatur von 200 bis 350 °C auf. Diese Maßnahme kann sowohl mit dem erfindungsgemäßen Verfahren gemäß Variante (1) als auch gemäß Variante (2) durchgeführt werden.

Schritt (2) des erfindungsgemäßen Verfahrens wird solange durchgeführt, bis mindestens ein Teil der injizierten wässrigen Formulierung F auf mindestens T_{K} erwärmt ist, so dass zumindest bei einem Teil der injizierten Formulierung F eine Viskositätserhöhung, durch Gelbildung, stattgefunden hat, und die hochpermeablen Kanäle dadurch zumindest so weit blockiert sind, dass bei Fortführen der Erdölförderung eine Steigerung der Erdölfördermenge bzw. eine Reduktion der Produktionsverwässerung erfolgt. Dies kann je nach Ausführungsform kürzer oder länger dauern. Wird Schritt (2) beispielsweise gemäß Variante (1) durchgeführt, das heißt Wasserdampf wird direkt in die erdölführende Schicht L injiziert, erfolgt die Viskositätserhöhung in der Nahumgebung der Bohrung (3-5 Meter Radius) meist deutlich schneller, beispielsweise innerhalb einiger Tage, zum Beispiel innerhalb von 1 bis 3 Tagen. Wird Schritt (2) gemäß Variante (2) durchgeführt, ist üblicherweise mehr Zeit erforderlich, bis die für die Viskositätserhöhung erforderliche Temperatur T_{K} erreicht ist. Dies kann, je nach Abstand zwischen den betreffenden Schichten L und B auch einige Monate, beispielsweise 4 bis 6 Monate dauern. Dies ist insbesondere dann kein Problem, wenn echte Lösungen wie die vorstehend beschriebenen wässrigen Formulierungen F enthaltend mindestens eine Verbindung M und mindestens einen wasserlöslichen Aktivator in Schritt (1) eingesetzt werden, da diese Formulierungen als echte Lösungen gegen Ausflockung und Sedimentieren stabil sind und ihre Eigenschaft, bei Erwärmen auf mindestens T_{K} eine Viskositätserhöhung zu zeigen, auch nach einigen Monaten Lagerung in der Lagerstätte nicht verlieren.

Prinzipiell kann Schritt (2) erfindungsgemäß gemäß Variante (1) oder Variante (2) durchgeführt werden, es ist auch möglich, die jeweiligen Maßnahmen der beiden Varianten gleichzeitig oder zeitlich aufeinander folgend durchzuführen, das heißt in Schritt (2) kann Wasserdampf sowohl in die erdölführende Schicht L und in eine oder mehrere weitere gegebenenfalls vorhandene Schichten B injiziert werden. Dies kann gleichzeitig oder zeitlich abwechselnd nacheinander erfolgen.

Gegebenenfalls kann nach Injizieren der mindestens einen wässrigen Formulierung F noch mit Wasser nachgeflutet werden, beispielsweise um die wässrige Formulierung tiefer in die erdölführende Schicht L zu verschieben.

### Verfahrensschritt (3)

In Verfahrensschritt (3) wird die Förderung von Erdöl durch mindestens eine Produktionsbohrung fortgesetzt. Die Ölförderung kann nach üblichen Methoden durch Einpressen eines Flutmediums durch mindestens eine Injektionsbohrung in die Erdöllagerstätte und Entnehmen von Rohöl durch mindestens eine Produktionsbohrung erfolgen. Bei dem Flutmedium kann es sich insbesondere um Kohlendioxid, Gas-Wasser-Mischung, Wasser, verdicktes Wasser und/oder Dampf handeln. Bei der mindestens einen Injektionsbohrung kann es sich um die bereits zum Injizieren der Formulierung F in Verfahrensschritt (1) und des Wasserdampfes in Verfahrensschritt (2) verwendeten Injektionsbohrungen handeln oder auch um geeignet angeordnete andere Injektionsbohrungen.

Die Ölförderung kann aber selbstverständlich auch mittels anderer, dem Fachmann bekannter Methoden fortgesetzt werden. Beispielsweise kann man als Flutmedium auch viskose Lösungen von silikathaltigen Produkten oder verdickenden Polymeren einsetzten. Hierbei kann es sich um synthetische Polymere, wie beispielsweise Polyacrylamid oder Acrylamid umfassende Copolymere handeln. Weiterhin kann es sich auch um Biopolymere handeln, wie beispielsweise bestimmte Polysaccharide.

Im Folgenden wird die vorliegende Erfindung anhand von Beispielen beschriebenen.

### Anwendung des Verfahrens im Ölfeld

Ein Beispiel für eine mögliche Art der Durchführung ist nachfolgend beschrieben.

Es handelt sich um eine typische Erdöllagerstätte mit viskosem Öl (150 bis 190 mPa.s (150 bis 190 cP) vor Beginn der Erdölförderung). Ein Abschnitt der Lagerstätte ist mit einer Injektionsbohrung und mehreren Produktionsbohrungen versehen und wird bereits mehrere Jahre mit Wasser geflutet. Die natürliche Lagerstättentemperatur beträgt 37 °C. Nach Schätzungen ist die Lagerstättentemperatur nach dem Wasserfluten auf 20 bis 25 °C gesunken (zumindest in den gut "durchgewaschenen" Zonen). Die vertikale und die horizontale Permeabilität weisen eine ausgeprägte Anisotropie auf. Die Lagerstätte hat zahlreiche geologische Störstellen. Die meisten geologischen Störstellen sind wasserführend. In dem mit Wasser gefluteten Lagerstättenabschnitt beträgt der Entölungsgrad 20 %. Die Produktionsverwässerung hat 94 % erreicht, das heißt, 94 % der geförderten Flüssigkeit ist Wasser. Die Kommunikation, das heißt der Fluss des injizierten Flutmediums zwischen Injektionsbohrungen und Produktionsbohrungen, findet vorwiegend über die geologischen Störstellen und eine ölführenden Schicht mit extrem hoher Permeabilität und kleiner Mächtigkeit statt.

Es wird die Entscheidung getroffen, die Lagerstätte durch Dampffluten weiter zu behandeln.

In einer mathematischen Simulation wird festgestellt, dass das Volumen der hoch permeablen Bereiche im Radius von 50 m von der Injektionsbohrung circa 12.000 m³ beträgt (hypothetisches Porenvolumen/Leerraum). Eine Blockade der hoch permeablen Bereiche/Kanäle in einem Radius von 50 m um die Injektionsbohrung ist ausreichend, um eine effektive Profilmodifikation für das nachträgliche Dampffluten durchzuführen.

Direkt vor Beginn des Dampfflutens werden circa 3000 m³ wässrige Formulierung der folgenden Zusammensetzung durch die Injektionsbohrung in die Lagerstätte injiziert:
30 Gew.-% Harnstoff,
18 Gew.-% Aluminiumhydroxychlorid,
0,5 Gew.-% Polyacrylamid und
51,5 Gew.-% Wasser.

Die Konzentrationsangaben beziehen sich auf das Gesamtgewicht der Formulierung.

Beim Injizieren und Fließen der Formulierung in der Lagerstätte wird sie mit dem in der Lagerstätte vorhandenen Wasser in einem Radius von 50 m um die Injektionsbohrung etwa auf das Vierfache verdünnt, dass potentielle Gelvolumen beträgt somit circa 12.000 m³. Beim Verdünnen der Formulierung mit Wasser und der nachträglichen Gelbildung der Formulierung beim Dampffluten behält das Gel die gewünschten rheologischen Eigenschaften. Erst bei einer Verdünnung auf über das Achtfache verliert die Formulierung die gewünschten rheologischen Eigenschaften und damit ihre Fähigkeit zur Profilmodifikation. Danach werden 500 m³ Wasser injiziert. Das Polyacrylamid dient für die Verdickung der Formulierung F. Durch Zugabe von Polyacrylamid erreicht die Viskosität der Formulierung (vor dem Vergelen) 10 - 40 mPa.s (10-50 cP).

Die leicht viskose Masse fliest vorwiegend durch die Störstellen und durch die hochpermeable dünne Schicht.

Anschließend wird das Fluten mit heißem Wasserdampf begonnen. Die Dampftemperatur beträgt 280 bis 320 °C. Durch seine große Mobilität verbreitet sich der Dampf relativ schnell in der Lagerstätte und kondensiert unter Abgabe von Kondensationswärme. Die Temperatur in der Nahzone der Injektionsbohrung überschreitet nach etwa 3 bis 5 Tagen die kritische Temperatur T_{K}. T_{K} ist in diesem Fall die Gelbildungstemperatur der injizierten wässrigen Formulierung, die bei 60 bis 70 °C liegt. Die injizierte wässrige Formulierung wandelt sich zum Gel um. Auch wenn das Gestein in der Lagerstätte die kritische Temperatur T_{K} noch nicht erreicht hat, mischt sich das heiße Dampfkondensat mit der wässrigen Formulierung, wodurch die Temperatur der Formulierung steigt und ein Gel entsteht, das die Poren und Risse im Gestein teilweise oder vollständig blockiert. Die Viskosität des entstehenden Gels erreicht 500 bis 1500 mPa.s (500 bis 1500 cP). Infolgedessen werden der Dampf und das heiße Dampfkondensat in die beim Wasserfluten lediglich schwach entölten Zonen der Lagerstätte umgeleitet. Mit fortschreitendem Dampffluten wandert die Temperaturfront von der Injektionsbohrung in Richtung Produktionsbohrung. Dabei wächst das Gelvolumen in der Lagerstätte. In Folge steigen die Ölförderraten und der Entölungsgrad der Lagerstätte und die Produktionsverwässerung sinkt.

## Patentansprüche

1. Verfahren zur Förderung von Erdöl aus einer unterirdischen Erdöllagerstätte umfassend mindestens eine ölführende Schicht L, in die mindestens eine Injektionsbohrung und mindestens eine Produktionsbohrung abgeteuft sind, umfassend die folgenden Verfahrensschritte:
(1) Injizieren mindestens einer wässrigen Formulierung F, die bei Erwärmen der mindestens einen wässrigen Formulierung F auf eine kritische Temperatur T_{K} oder darüber ein Gel bildet, durch die mindestens eine Injektionsbohrung in die mindestens eine ölführende Schicht L, wobei die Temperatur T_{L} der mindestens einen ölführenden Schicht zwischen 8 und 60°C beträgt und die kritische Temperatur T_{K} oberhalb der Temperatur T_{L} der mindestens einen ölführenden Schicht L liegt,
(2) Direktes und/oder indirektes Erwärmen mindestens eines Teils der in Schritt (1) injizierten wässrigen Formulierung F durch Injizieren von Wasserdampf in die Erdöllagerstätte, wobei die Temperatur des injizierten Wasserdampfs zwischen 200 und 350°C beträgt,
(3) Förderung von Erdöl durch mindestens eine Produktionsbohrung,
wobei die Temperatur der wässrigen Formulierung F beim Injizieren gemäß Schritt (1) unterhalb ihrer kritischen Temperatur T_{K} liegt und Schritt (2) mindestens solange durchgeführt wird, bis mindestens ein Teil der in Schritt (1) injizierten wässrigen Formulierung F auf eine Temperatur von mindestens T_{K} erwärmt ist.

2. Verfahren gemäß Anspruch 1, **dadurch gekennzeichnet, dass** zum direkten Erwärmen in Schritt (2) der Wasserdampf durch die mindestens eine Injektionsbohrung in die mindestens eine ölführende Schicht L injiziert wird.

3. Verfahren gemäß Anspruch 1, **dadurch gekennzeichnet, dass** zum indirekten Erwärmen in Schritt (2) der Wasserdampf in mindestens eine Schicht B in der Erdöllagerstätte, die in thermischen Kontakt mit der mindestens einen ölführenden Schicht L steht, injiziert wird.

4. Verfahren gemäß Anspruch 3, **dadurch gekennzeichnet, dass** es sich bei Schicht B um eine erdölführende Schicht handelt.

5. Verfahren gemäß einem der Ansprüche 1 bis 4, **dadurch gekennzeichnet, dass** vor Schritt (1) die Temperatur T_{L} bestimmt wird.

6. Verfahren gemäß einem der Ansprüche 1 bis 5,**dadurch gekennzeichnet, dass** die Viskosität des in der mindestens einen ölführenden Schicht L enthaltenen Erdöls mindestens 30 mPa.s (30 cP) beträgt, gemessen bei der Temperatur T_{L}.

7. Verfahren gemäß Anspruch 1, **dadurch gekennzeichnet, dass** die mindestens eine wässrige Formulierung F mindestens eine Verbindung ausgewählt aus Aluminiumchlorid, Aluminiumnitrat, Aluminiumacetat, Aluminiumacetylacetonat, Aluminiumsulfat, deren Teilhydrolysaten, und Mischungen davon und mindestens einen wasserlösliche Aktivator ausgewählt aus Harnstoff, substituiertem Harnstoff, Hexamethylentetramin, Cyanaten und Mischungen davon enthält.

8. Verfahren gemäß einem der Ansprüche 1 bis 7, **dadurch gekennzeichnet, dass** die mindestens eine wässrige Formulierung F Verdicker enthält.

9. Verfahren gemäß einem der Ansprüche 1 bis 8, **dadurch gekennzeichnet, dass** während Schritt (1) Erdöl aus der mindestens einen Produktionsbohrung entnommen wird und sobald in dem entnommenen Erdöl durch die mindestens eine Injektionsbohrung injizierte wässrige Formulierung F detektiert wird, Schritt (2) begonnen wird.

10. Verfahren gemäß einem der Ansprüche 1 bis 9, **dadurch gekennzeichnet, dass** während Schritt (1) Erdöl aus mindestens einer Produktionsbohrung entnommen wird und sobald in dem entnommenen Erdöl durch die mindestens eine Injektionsbohrung injizierte wässrige Formulierung F detektiert wird, aus dieser Produktionsbohrung zeitweise kein Erdöl entnommen wird.

11. Verfahren gemäß Anspruch 9 oder 10, **dadurch gekennzeichnet, dass** in die Produktionsbohrungen, in deren entnommenem Erdöl durch die mindestens eine Injektionsbohrung injizierte wässrige Formulierung F detektiert wird, vor Schritt (3) Wasserdampf injiziert wird.

12. Verfahren gemäß Anspruch 11, **dadurch gekennzeichnet, dass** der injizierte Wasserdampf eine Temperatur von 200 bis 350 °C aufweist.

## Claims

1. A process for producing mineral oil from an underground mineral oil deposit comprising at least one oil-bearing stratum L into which at least one injection well and at least one production well have been sunk, said process comprising the following process steps:
(1) injecting at least one aqueous formulation F which forms a gel when heating the at least one aqueous formulation F at or above a critical temperature T_{K} through the at least one injection well into the at least one oil-bearing stratum L, wherein the temperature T_{L} of the at least one oil-bearing stratum L is between 8 and 60°C, the critical temperature T_{K} being above the temperature T_{L} of the at least one oil-bearing stratum L,
(2) directly and/or indirectly heating at least a portion of the aqueous formulation F injected in step (1) by injecting steam into the mineral oil deposit, wherein the temperature of the injected steam is between 200 and 350°C,
(3) producing mineral oil through at least one production well, wherein the temperature of the aqueous formulation F on injecting according to step (1) being below the critical temperature T_{K} thereof, and step (2) being conducted at least until at least a portion of the aqueous formulation F injected in step (1) has been heated to a temperature of at least T_{K}.

2. The process according to claim 1, **characterised in that** for the direct heating of step (2) the steam is injected through the at least one injection well into the at least one oil-bearing stratum L.

3. The process according to claim 1, **characterised in that** for the indirect heating of step (2) the steam is injected into at least one stratum B inside the mineral oil deposit which is in thermal contact with the at least one oil-bearing stratum L.

4. The process according to claim 3, **characterised in that** the stratum B is an oil-bearing stratum.

5. The process according to one of claims 1 to 4, **characterised in that** the temperature T_{L} is determined prior to step (1).

6. The process according to one of claims 1 to 5, **characterised in that** the viscosity of the mineral oil present in the at least one oil-bearing stratum L is at least 30 mPa.s (30 cP), measured at the temperature T_{L}.

7. The process according to claim 1, **characterised in that** the at least one aqueous formulation F comprises at least one compound selected from the group consisting of aluminium chloride, aluminium nitrate, aluminium acetate, aluminium acetylacetonate, aluminium sulphate, partial hydrolysates thereof, and mixtures thereof, and at least one water-soluble activator selected from the group consisting of urea, substituted urea, hexamethylenetetramine, cyanates and mixtures thereof.

8. The process according to one of claims 1 to 7, **characterised in that** the at least one aqueous formulation F comprises thickeners.

9. The process according to one of claims 1 to 8, **characterised in that** mineral oil is withdrawn from the at least one production well during step (1), and step (2) is commenced as soon as aqueous formulation F injected through the at least one injection well is detected in the mineral oil withdrawn.

10. The process according to one of claims 1 to 9, **characterised in that** mineral oil is withdrawn from at least one production well during step (1), and no mineral oil is withdrawn from this production well for a period as soon as aqueous formulation F injected through the at least one injection well is detected in the mineral oil withdrawn.

11. The process according to claim 9 or 10, **characterised in that** steam is injected before step (3) into the production wells where aqueous formulation F injected through the at least one injection well is detected in the mineral oil withdrawn therefrom.

12. The process according to claim 11, **characterised in that** the steam injected has a temperature of 200 to 350°C.

## Revendications

1. Procédé de transport de pétrole à partir de stations de stockage de pétrole souterraines comprenant au moins une couche conduisant le pétrole L, dans laquelle sont forés au moins un forage d'injection et au moins un forage de production, comprenant les étapes de procédé suivantes consistant à :
(1) injecter au moins une formulation aqueuse F, qui forme un gel lors du réchauffement de la au moins une formulation aqueuse F jusqu'à une température T_{K} critique ou au-dessus, à travers le au moins un forage d'injection dans la au moins une couche conduisant le pétrole L, la température T_{L} de la au moins une couche conduisant le pétrole étant comprise entre 8 et 60°C et la température critique T_{K} étant située au-dessus de la température T_{L} de la au moins une couche conduisant le pétrole L,
(2) chauffer directement et/ou indirectement au moins une partie de la formulation aqueuse F injectée à l'étape (1) par injection de vapeur d'eau dans la station de stockage de pétrole, la température de la vapeur d'eau injectée étant comprise entre 200 et 350°C,
(3) transporter le pétrole à travers au moins un forage de production, la température de la formulation aqueuse F étant située en dessous de sa température T_{K} critique lors de l'injection selon l'étape (1) et l'étape (2) étant réalisée au moins jusqu'à ce qu'au moins une partie de la formulation aqueuse F injectée à l'étape (1) se réchauffe jusqu'à une température d'au moins T_{K}.

2. Procédé selon la revendication 1, **caractérisé en ce que** la vapeur d'eau est injectée à travers au moins un forage d'injection dans la au moins une couche conduisant le pétrole L pour le chauffage direct à l'étape (2).

3. Procédé selon la revendication 1, **caractérisé en ce que** la vapeur d'eau est injectée dans au moins une couche B dans la station de stockage de pétrole, qui se trouve en contact thermique avec la au moins une couche conduisant le pétrole L, pour le chauffage indirect à l'étape (2).

4. Procédé selon la revendication 3, **caractérisé en ce que** la couche B est une couche conduisant le pétrole.

5. Procédé selon l'une quelconque des revendications 1 à 4, **caractérisé en ce que** la température T_{L} est déterminée avant l'étape (1).

6. Procédé selon l'une quelconque des revendications 1 à 5, **caractérisé en ce que** la viscosité du pétrole contenu dans la au moins une couche conduisant le pétrole L est d'au moins 30 mPa.s (30 cP), mesurée à la température T_{L}.

7. Procédé selon la revendication 1, **caractérisé en ce que** la au moins une formulation aqueuse F contient au moins un composé choisi parmi le chlorure d'aluminium, le nitrate d'aluminium, l'acétate d'aluminium, l'acétylacétonate d'aluminium, le sulfate d'aluminium, leurs hydrolysats partiels, et des mélanges de ceux-ci, et au moins un activateur hydrosoluble choisi parmi l'urée, l'urée substituée, l'hexaméthylène tétramine, les cyanates et des mélanges de ceux-ci.

8. Procédé selon l'une des revendications 1 à 7, **caractérisé en ce que** la au moins une formulation aqueuse F contient des épaississants.

9. Procédé selon l'une des revendications 1 à 8, **caractérisé en ce que** le pétrole est prélevé du au moins un forage de production au cours de l'étape (1) et l'étape (2) débute dès que la formulation aqueuse F injectée à travers le au moins un forage d'injection est détectée dans le pétrole prélevé.

10. Procédé selon l'une quelconque des revendications 1 à 9, **caractérisé en ce que**, lors de l'étape (1), du pétrole est prélevé d'au moins un forage de production et qu'aucun pétrole n'est temporairement prélevé de ce forage de production dès que la formulation aqueuse F injectée à travers le au moins un forage d'injection est détectée dans le pétrole prélevé.

11. Procédé selon la revendication 9 ou 10, **caractérisé en ce que** la vapeur d'eau est injectée avant l'étape (3) dans les forages de production, dans le pétrole prélevé desquels une formulation aqueuse F injectée à travers le au moins un forage d'injection est détectée.

12. Procédé selon la revendication 11, **caractérisé en ce que** la vapeur d'eau injectée présente une température de 200 à 350°C.
